Europäisches Patentamt

European Patent Office

Office européen des brevets

(19)

(11) Veröffentlichungsnummer: **0 290 783 B1**

# EUROPÄISCHE PATENTSCHRIFT

(12)

(45) Veröffentlichungstag der Patentschrift: **17.07.91**

(51) Int. Cl.5: **F01D 5/22**, F16B 3/04

(21) Anmeldenummer: **88105523.0**

(22) Anmeldetag: **07.04.88**

(54) Befestigung einer Deckplatte an dem Blatt einer Turbomaschinenschaufel.

(30) Priorität: **13.04.87 CH 1419/87**

(43) Veröffentlichungstag der Anmeldung:
**17.11.88 Patentblatt 88/46**

(45) Bekanntmachung des Hinweises auf die
Patenterteilung:
**17.07.91 Patentblatt 91/29**

(84) Benannte Vertragsstaaten:
**CH DE FR GB LI SE**

(56) Entgegenhaltungen:
**DE-C- 145 116**    **DE-C- 838 670**
**FR-A- 1 332 988**    **GB-A- 173 803**
**US-A- 1 423 466**    **US-A- 2 445 154**
**US-A- 3 666 302**

(73) Patentinhaber: **BBC Brown Boveri AG**
**Haselstrasse**
**CH-5401 Baden(CH)**

(72) Erfinder: **Fried, Reinhard**
**Stockackerstrasse 1**
**CH-5415 Nussbaumen(CH)**

EP 0 290 783 B1

**Beschreibung**

Verfahren zur Herstellung einer aus einem Schaufelblatt, einem Schaufelfuss und einer Deckplatte oder einem Deckband bestehenden Schaufel für eine rotierende thermische Maschine durch Befestigen einer Deckplatte, und nach diesem Verfahren hergestellte Schaufel.

Technisches Gebiet

Rotierende thermische Maschinen für sehr hohe Ansprüche. Kritisches Bauteil ist die Schaufel, welche unter stark wechselnden mechanischen und thermischen Bedingungen eine möglichst hohe Lebensdauer zu gewährleisten hat.

Die Erfindung bezieht sich auf die Weiterentwicklung hochbeanspruchter Schaufeln für rotierende thermische Maschinen, insbesondere für Gasturbinen, unter Berücksichtigung optimaler Werkstoffauswahl für die verschiedenen Teile. Dabei sollen vorzugsweise auch oxyddispersionsgehärtete Legierungen für das Schaufelblatt berücksichtigt werden.

Insbesondere betrifft sie ein Verfahren zur Herstellung einer aus einem Schaufelblatt, einem Schaufelfuss und einer Deckplatte oder einem Deckband bestehenden Schaufel für eine rotierende thermische Maschine durch Befestigen einer Deckplatte oder eines Deckbandes am Kopfende des Schaufelblattes.

Ferner betrifft sie eine Schaufel für eine rotierende thermische Maschine, bestehend aus einem Schaufelblatt, einem Schaufelfuss und einer Deckplatte oder einem Deckband, wobei letztere oder letzteres am Kopfende des Schaufelblattes befestigt ist.

Stand der Technik

Deckplatten und Deckbänder an Leit- und Laufschaufelkränzen von rotierenden Maschinen (Dampf- und Gasturbinen) dienen zur Verbesserung der Strömungsverhältnisse (Aerodynamik) sowie des thermischen Wirkungsgrades (Thermodynamik) der Maschine. Ausserdem sollen sie das Schwingungsverhalten insbesondere von Rotoren durch Veränderung der Eigenfrequenzen und Erhöhung der Dämpfung verbessern. Im Maschinenbau sind zahlreiche Befestigungsarten von Deckplatten bzw. Deckbändern am Kopfende der Schaufel bekannt. Bei Dampfturbinen findet man oft an der Stirnseite des Kopfendes der Schaufeln angenietete Deckbänder. Deckplatten können auch aus dem vollen durch mechanische Bearbeitung oder durch Giessen hergestellt sein. Es kann dazu unter anderem folgende Literatur zitiert werden:
- Walter Traupel, Thermische Turbomaschinen, 2. Bd. Regelverhalten, Festigkeit und dynamische Probleme, Springer Verlag 1960
- H. Petermann, Konstruktion und Bauelemente von Strömungsmaschinen, Springer Verlag 1960
- Fritz Dietzel, Dampfturbinen, Georg Liebermann Verlag 1950
- Fritz Dietzel, Dampfturbinen, Berechnung, Konstruktion, Carl Hauser Verlag 1980
- C. Zitemann, Die Dampfturbinen, Springer Verlag 1955
- US-A-2 455 154
- DE-C-838 670.

Als Schaufelwerkstoffe für hochbeanspruchte Gasturbinen sind in neuerer Zeit oxyddispersionsgehärtete Nickelbasis-Superlegierungen vorgeschlagen worden, da sie gegenüber gewöhnlichen Guss- und Superlegierungen höhere Betriebstemperaturen erlauben. Um bei hohen Temperaturen die besten Festigkeitswerte (hohe Zeitstandfestigkeit) zu erreichen, werden Bauteile aus diesen Legierungen mit in Schaufelachse gerichteten, längsgestreckten groben Kristalliten eingesetzt. Im Verlauf der Herstellung muss im allgemeinen das Werkstück (Hallbzeug oder Fertigteil) einen Zonenglühprozess durchmachen. Aus verschiedenen Gründen (Thermodynamik, Kristallisationsgesetz) siand die Querschnittsabmessungen derartiger Schaufelwerkstoffe im grobkörnigen Zustand begrenzt. Damit werden den Schaufelabmessungen ebenfalls Grenzen gesetzt. Da nun die Fläche einer Deckplatte in der Regel ein Mehrfaches der Querschnittsfläche des entsprechenden Schaufelblattes ausmacht, können Blatt und Deckplatte von gewissen Abmessungen an nicht mehr monolithisch aus einem Stück gefertigt werden. Sollen oxyddispersionsgehärtete Superlegierungen erfolgreich und allgemein eingesetzt werden, ergibt sich daher die Forderung nach einer Aufteilung in Schaufelblatt einerseits und Deckplatte andererseits.

Im allgemeinen Maschinenbau sind zahlreiche kraftschlüssige Verbindungen von Bauelementen unter Zuhilfenahme von Keilen, Bolzen, Drähten etc. bekannt. Oft werden derartige Elemente bloss als Sicherung verwendet. In der US-A-2 455 154 ist die Befestigung des Schaufelfusses der Schaufel eines Axialkompressors im Rotorkörper mittels eines kreisförmig gebogenen Drahtes (Torusform) beschrieben. Die Passung zwischen dem Schaufelfuss und dem Rotorkörper ist als Schiebesitz eines Kreisscheiben-Segments

2

EP 0 290 783 B1

gestaltet. Die DE-C-838 670 beschreibt eine lösbare Verbindung von rotationssymmetrischen Maschinenteilen mittels eines ringförmigen Federelements (Torusform). Statt eines kompakten vollen Drahtes wird eine biegsame Schraubenfeder in den durch gegenüberliegende Nuten gebildeten Kanal geschoben. Im Gasturbinenbau ist eine steigende Tendez zum Einsatz oxyddispersionsgehärteter Superlegierungen als Schaufelwerkstoffe feststellbar. Es besteht daher ein Bedürfnis für eine Weiterentwicklung betriebstüchtiger Konstruktionen auf diesem Gebiet.

Darstellung der Erfindung

Der Erfindung liegt die Aufgabe zugrunde, eine Schaufel für eine rotierende thermische Maschine, bestehend aus einem Schaufelblatt, einem Schaufelfuss und einer Deckplatte oder einem Deckband sowie ein Verfahren zu ihrer Herstellung anzugeben, wobei Deckplatte bzw. Deckband am Kopfende des Schaufelblattes zu befestigen sind und dem Maschinenbauer das höchstmögliche Mass an konstruktiver Freiheit und Auswahl der optimal zueinander passenden Werkstoffe eingeräumt werden soll. Dies gilt insbesondere für den Fall der Verwendung oxyddispersionsgehärteter Superlegierungen im Zustand längsgerichteter grober Stengelkristalle für das Schaufel-blatt, da diese Werkstoffe nur in beschränkten Querschnittsabmessungen im Handel verfügbar sind. Gegebenenfalls soll die Deckplatte auswechselbar (demontierbar) befestigt werden. Das Verfahren soll möglichst werkstoffunabhängig auf alle in der Praxis vorkommenden Verhältnisse beim Bau thermischer Maschinen anwendbar sein.

Diese Aufgabe wird dadurch gelöst, dass im eingangs erwähnten Verfahren das Kopfende mit einer dem Profil des Schaufelblattes ähnlichen, zapfenartigen Absetzung versehen wird, welche auf ihrer Mantelfläche in einer Ebene senkrecht zur radial stehenden Längsachse der Schaufel mit einer um den ganzen Umfang der Mantelfläche verlaufenden aussenliegenden Nut halbkreisförmigen Querschnitts versehen wird und dass die Deckplatte mit einer dem Profil der Absetzung entsprechenden Vertiefung versehen wird, in deren innenliegende Mantelfläche eine um den ganzen Umfang verlaufende Nut halbkreisförmigen Querschnitts mit gleichem Durchmesser wie derjenige der Nut in der Absetzung sowie Bohrungen zur Einführung mindestens eines Drahtes eingearbeitet werden, dass ferner diese derart vorbereiteten Bauteile in Richtung der Längsachse der Schaufel zusammengesetzt werden, derart, dass die Nuten einen Kanal mit vollständigem Kreisquerschnitt bilden, und dass in diesen Kanal ein oder mehrere Stücke eines blanken, stramm sitzenden, an seinem vorderen Ende spitzen warmfesten Drahtes eingestossen und/oder gezogen und die an der Schmalseite der Deckplatte vorstehenden Drahtenden abgetrennt werden.

Die Aufgabe wird ferner dadurch gelöst, dass bei der eingangs erwähnten Schaufel das Kopfende des Schaufelblattes eine dem Profil des Schaufelblattes ähnliche zapfenartige Absetzung mit einer um den ganzen Umfang der Mantelfläche verlaufenden aussenliegenden Nut halbkreisförmigen Querschnitts aufweist, dass die Deckplatte oder das Deckband eine der Absetzung des Schaufelblattes entsprechende Vertiefung mit einer um den ganzen Umfang der innenliegenden Mantelfläche verlaufenden Nut halbkreisförmigen Querschnitts mit gleichem Durchmesser wie derjenige der Nut der Absetzung sowie Bohrungen zur Einführung mindestens eines Drahtes aufweist, und dass der derart durch besagte Nuten gebildete Kanal mitkreisförmigem Querschnitt durch ein oder mehrere gebogene, stramm sitzende Stücke eines warmfesten Drahtes derart ausgefüllt ist, dass eine rein mechanische, feste Verbindung zwischen dem Kopfende des Schaufelblattes und der Deckplatte oder dem Deckband besteht.

Weg zur Ausführung der Erfindung

Die Erfindung wird anhand der nachfolgenden, durch Figuren näher erläuterten Ausführungsbeispiele beschrieben.

Dabei zeigt:
Fig. 1    den Aufriss (Axialschnitt) einer Deckplatte,
Fig. 2    den Grundriss (Umfangsschnitt) einer Deckplatte,
Fig. 3    den Aufriss (Axialschnitt) des Kopfendes des Schaufelblattes einer Gasturbinenschaufel und den Schnitt durch eine Drahtschleife,
Fig. 4    den Grundriss (Draufsicht in radialer Richtung) des Kopfendes des Schaufelblattes,
Fig. 5    den Grundriss (Draufsicht in radialer Richtung) des ganzen Schaufelblattes einer Gasturbinenschaufel,
Fig. 6    den Aufriss / teilweisen Axialschnitt der Deckplatte und des Schaufelblattes einer Gasturbinenschaufel mit Drahtbefestigung,
Fig. 7    den Umfangsschnitt einer Deckplatte mit eingeschobenem Draht,
Fig. 8    den Umfangsschnitt einer Deckplatte und des Kopfendes des Schaufelblattes mit Befestigung

3

durch einen Draht,

Fig. 9      den Umfangsschnitt einer Deckplatte und des Kopfendes des Schaufelblattes mit Befestigung durch zwei Drähte,

Fig. 10      im Umfangsschnitt das Durchstossen/Ziehen eines Drahtes vollen Durchmessers,

Fig. 11      im Umfangsschnitt das Einlegen und nachträgliche Durchziehen eines Drahtes variablen Durchmessers,

Fig. 12      das Aufsetzen der Deckplatte auf das Kopfende des Schaufelblattes nach Einlegen des Drahtanfangs halben Durchmessers in einem Längsschnitt durch die Schaufel,

Fig. 13      verschiedene Drahtformen in Längsdarstellung.

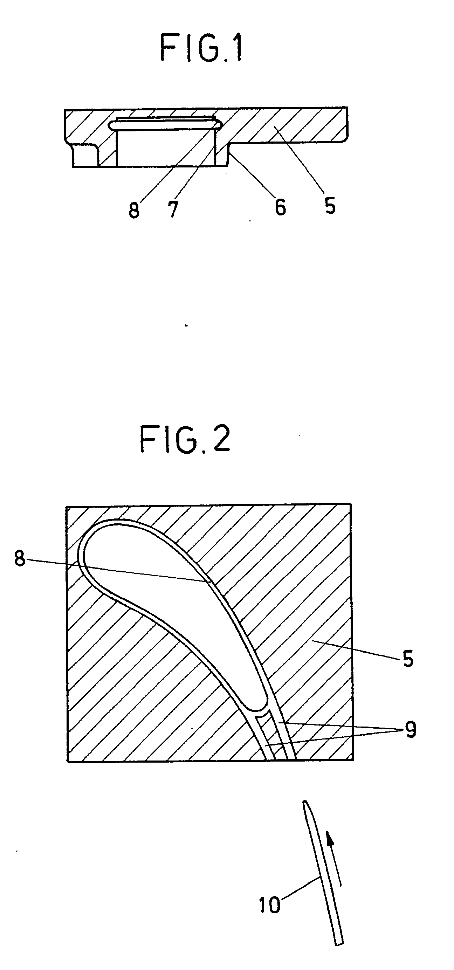

In Fig. 1 ist der Aufriss bzw. Axialschnitt (bezüglich Längsachse der Turbine und Längsachse der Turbinenschaufel) einer Deckplatte für die Leitschaufel einer Gasturbine dargestellt. 5 ist die Deckplatte aus einer Nickelbasis-Superlegierung, wobei grundsätzlich eine nichtdispersionsgehärtete Knet- oder Gusslegierung verwendet werden kann. Die Deckplatte 5 besitzt an ihrer innenliegenden Stirnseite eine mit einer Ausrundung versehene Absetzung 6. Die innenliegende Stirnseite weist ferner eine senkrecht zur Hauptebene der Deckplatte 5 verlaufende Vertiefung 7 in Form eines Sackloches auf. Diese Vertiefung 7 hat im Grundriss die Form eines dem Schaufelprofil am Kopfende ähnlichen, aber kleineren Tragflügelprofils. Ferner besitzt sie auf ihrer Mantelfläche eine meist um den ganzen Umfang umlaufende halbkreisförmige Nut 8 zur Aufnahme des Drahtes 10.

Fig. 2 zeigt den Grundriss (Umfangsschnitt) der Deckplatte 5 gemäss Fig. 1. Die Nut 8 endet am schmalen Ende des Tragflügelprofils und geht anschliessend unter angenäherter Beibehaltung der betreffenden Krümmung "tangential" in die beiden Bohrungen 9 zur Einführung des Drahtes 10 über. Letzterer besteht aus einer warmfesten Legierung, welche entweder duktil und aushärtbar oder von Natur aus hart bzw. gehärtet sein kann. Der Anfang des Drahtes 10 ist konisch zugespitzt und abgerundet. Der Pfeil deutet die Richtung der Einführung des Drahtes 10 in eine der Bohrungen 9 der Deckplatte 5 an.

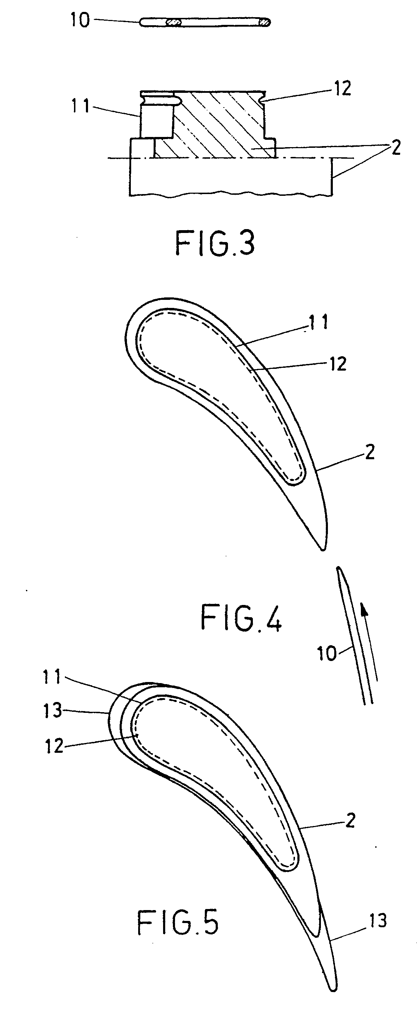

In Fig. 3 ist der Aufriss (Axialschnitt bezüglich Längsachse der Turbine und Längsachse der Turbinenschaufel) des Kopfendes des Schaufelblattes dargestellt. Darüber ist ein entsprechender Schnitt durch eine Drahtschleife gezeichnet. 2 ist das Kopfende des Schaufelblattes, teils im Aufriss, teils im Schnitt. 11 ist eine Absetzung am Kopfende 2 des Schaufelblattes in Form eines Zapfens. Diese Absetzung 11 hat - abgesehen von einem ev. kleinen Spiel für die Montage - genau die Form und die Abmessungen des Tragflügelprofils der Vertiefung 7 der Deckplatte 5 (posivite Entsprechung zur Negativform von 7). Die Mantelfläche der Absetzung 11 weist rundherum eine halbkreisförmige Nut 12 zur Aufnahme des Drahtes 10 auf. Letzterer ist darüber in Form einer Drahtschleife dargestellt.

Fig. 4 zeigt den Grundriss (Draufsicht in radialer Richtung des Turbinenrotors) des Kopfendes des Schaufelblattes gemäss Fig. 3. Die Bezugszeichen entsprechen genau denjenigen von Fig. 3.

Fig. 5 stellt den Grundriss (Draufsicht in radialer Richtung) des ganzen Schaufelblattes einer Gasturbinenschaufel dar. 11 ist die Absetzung (Zapfen) am Kopfende 2 im Profil, 12 die umlaufende Nut, 2 das Profil des Schaufelblattes am Kopfende, 13 dasjenige am Fussende.

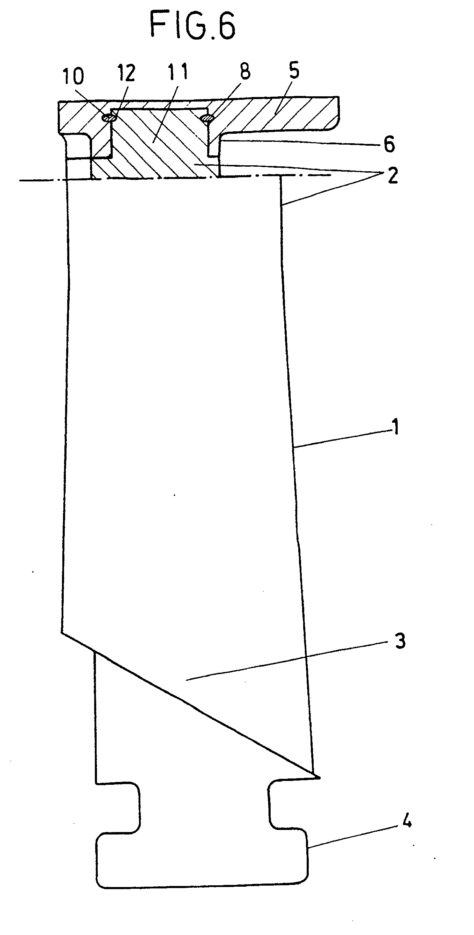

In Fig. 6 ist der Aufriss / teilweiser Axialschnitt der ganzen Turbinenschaufel (Deckplatte und Schaufelblatt) dargestellt. Das Schaufelblatt 1 hat ein Kopfende 2, ein Fussende 3 und einen Schaufelfuss 4 mit Befestigungsnuten und besteht aus einer oxyddispersionsgehärteten Nickelbasis-Superlegierung mit längsgerichteten groben Stengelkristallen. 5 ist die über die Nuten 8 und 12 mittels Draht 10 an der Absetzung 11 des Schaufelblattes befestigte Deckplatte mit der ausgerundeten Absetzung 6, welche geometrisch genau an das Kopfende 2 anschliesst.

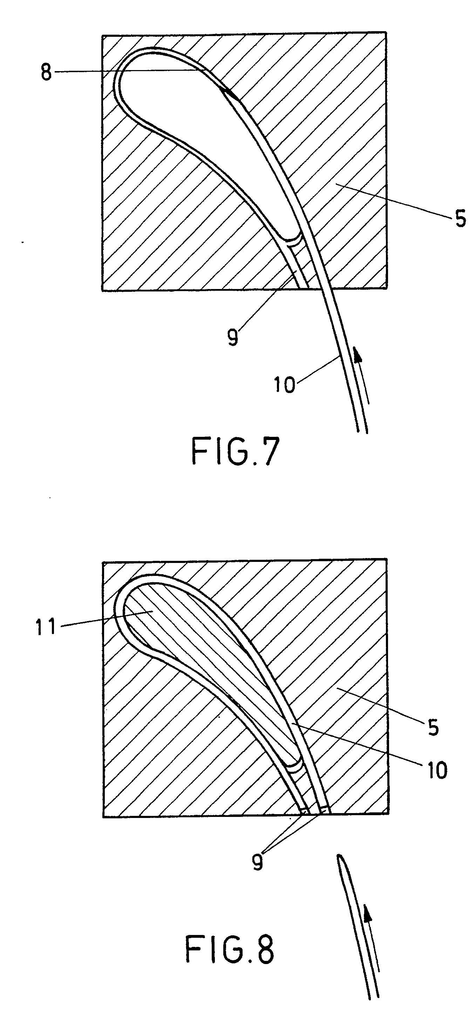

Fig. 7 zeigt den Umfangsschnitt einer Deckplatte mit eingeschobenem Drahtanfang. Die Figur stellt den Beginn des Einführens des Drahtes 10 durch die eine Bohrung 9 in die Nut 8 in der Deckplatte 5 dar. Das Gegenstück (der Zapfen 11 des Schaufelblattes 1) ist hier der Uebersichtlichkeit halber weggelassen worden.

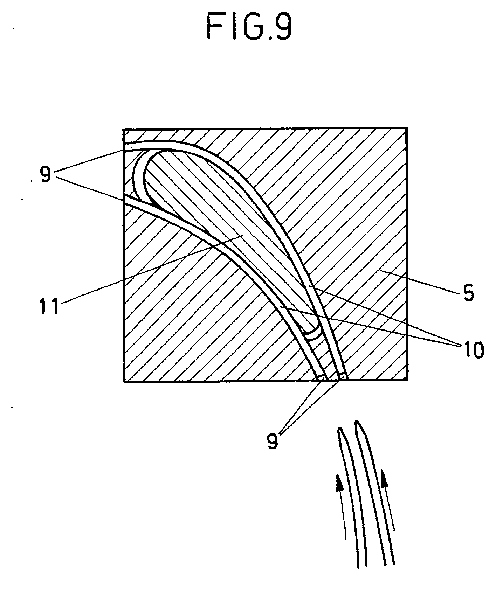

In Fig. 8 ist der Umfangsschnitt einer Deckplatte und des Kopfendes des Schaufelblattes mit der Befestigung durch einen einzigen Draht dargestellt. Der Draht 10 wurde durch eine der Bohrungen 9 in den durch die Nuten in der Absetzung 11 des Kopfendes des Schaufelblattes und der Deckplatte 5 gebildeten Hohlraum kreisförmigen Querschnitts eingeführt und festgeklemmt.

Fig. 9 zeigt den Umfangsschnitt einer Deckplatte und des Kopfendes des Schaufelblattes mit einer Ausführung der Befestigung durch zwei Drähte. Die Deckplatte 5 weist insgesamt 4 Bohrungen 9 auf, welche jeweils an das Tragflügelprofil gemäss Absetzung 11 anschliessen. Die Drähte 10 können im vorliegenden Fall aus einer naturharten oder bereits gehärteten warmfesten Legierung bestehen, da die zu durchlaufenden Krümmungsgradien vergleichsweise - gemessen am Drahtdurchmesser - gross sind. Die Pfeile zeigen die Einführungsrichtungen der Drahtspitzen an.

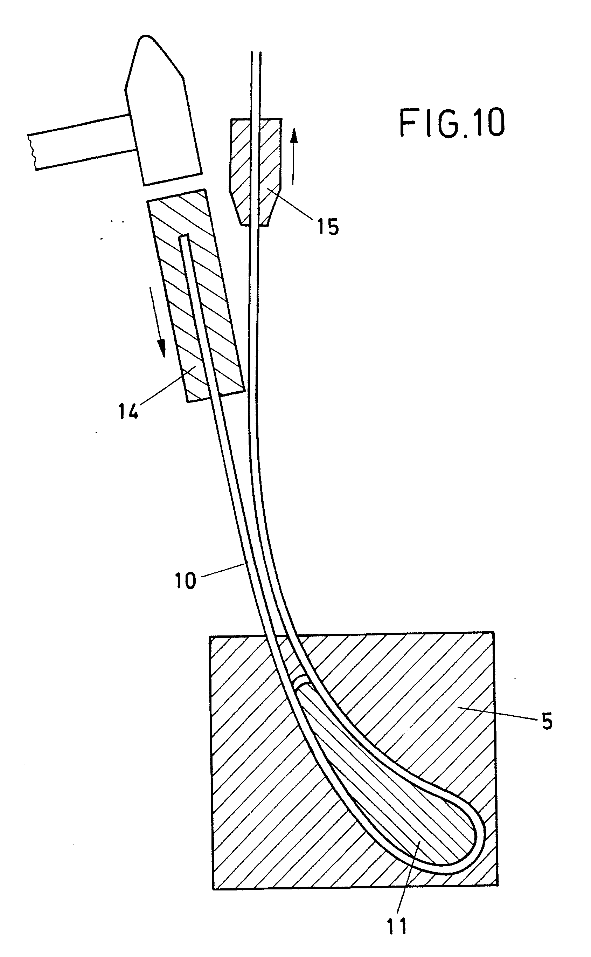

Fig. 10 zeigt im Umfangsschnitt das Durchstossen bzw. Durchziehen eines Drahtes vollen Durchmessers durch die axial zusammengefügten Werkstücksteile Schaufelblatt und Deckplatte. Deckplatte 5 und Absetzung 11 am Kopfende des Schaufelblattes sind im Schnitt gezeichnet. Der Draht 10 wird in die zwischen 5 und 11 vorhandene Nut gestossen und mittels Stossvorrichtung (Hülse) 14 - durch Hammerschläge angedeutet - und Zugvorrichtung (Klemmbacken) 15 weitertransportiert. Der Durchmesser des Drahtes 10 entspricht ungefähr demjenigen der Nut. Die Transportrichtung ist durch Pfeile angedeutet.

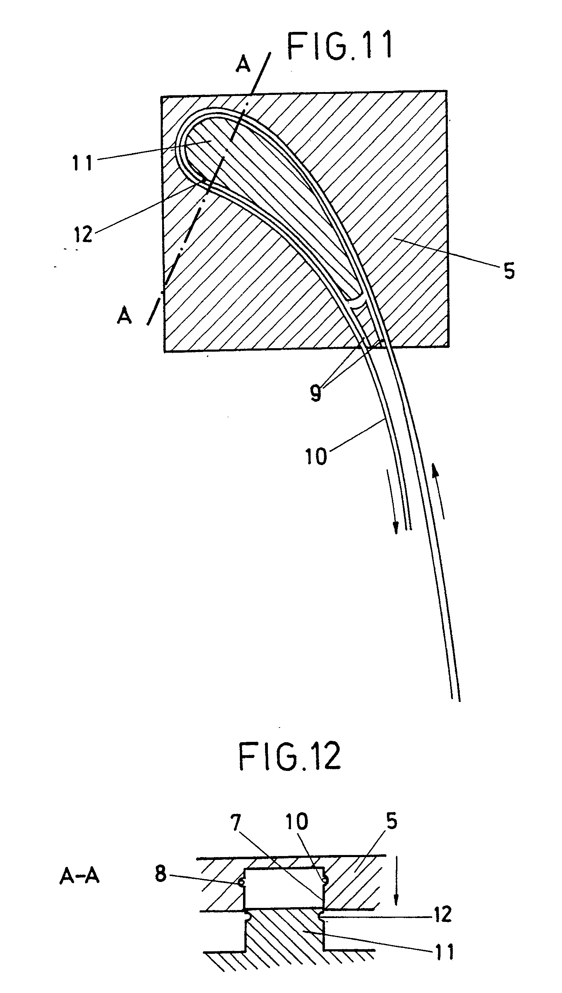

In Fig. 11 ist im Umfangsschnitt das Einlegen und nachträgliche Durchziehen eines Drahtes variablen Durchmessers dargestellt. Der erste Teil des Drahtes 10 hat einen Durchmesser, der dem halben Durchmesser der Nut 8 in der Deckplatte 5 oder der Nut 12 in der Absetzung 11 entspricht. Er wird vor dem Zusammenstecken von 5 und 11 über die Bohrungen 9 in 5 eingelegt. Nach dem axialen Zusammenstecken von 5 und 11 wird der Draht 10, welcher in seinem zweiten Teil einen schlanken Konus aufweist, der sich bis zum vollen Durchmesser der Nut 8 resp. 12 erstreckt, in Pfeilrichtung nachgezogen, bis der letzte Teil des vollen Durchmessers auf der ganzen Länge des durch die Nuten 8 und 12 gebildeten Kanals zum Anliegen kommt.

Fig. 12 zeigt in einem Längsschnitt A-A durch die Schaufel (siehe Fig. 11!) schematisch das Aufsetzen der Deckplatte 5 auf die Absetzung 11 (Zapfen) des Kopfendes des Schaufelblattes 1 nach vorangegangenem Einlegen des Drahtanfangs halben Nutdurchmessers. Der Draht 10 vom halben Durchmesser der Nuten ist in die Nut 8 der Deckplatte 5 eingelegt. Die Figur hält den Moment fest, wo die Deckplate 5 mit ihrer Vertiefung 7 (Sackloch) über die Absetzung 11 gestülpt wird, bis ihre Nut 8 mit der Nut 12 zur Deckung gebracht wird.

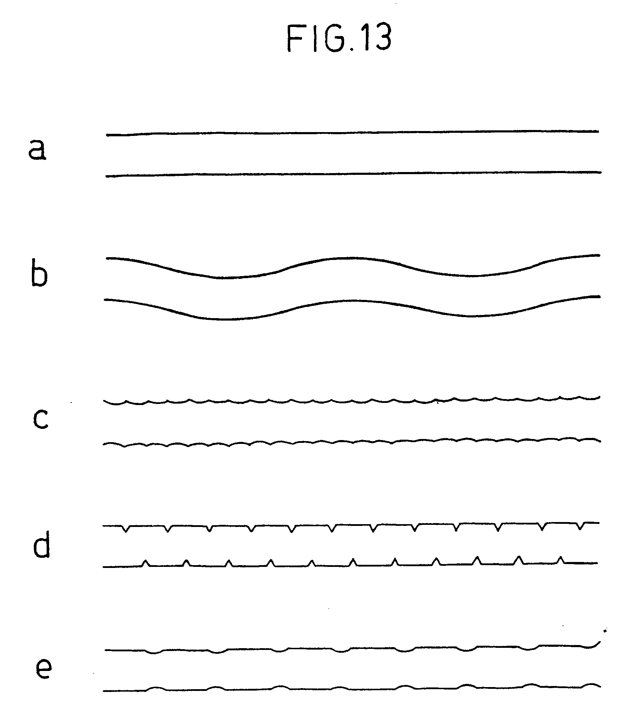

In Fig. 13 sind die verschiedenen Drahtformen in Längsrichtung dargestellt. Die Figur erklärt sich von selbst. Die kleinen Buchstaben bedeuten:

- a: glatt, gerade
- b: gewellt
- c: gerändelt
- d: gekerbt
- e: eingeschnürt

Ausführungsbeispiel 1:

Siehe Figuren 1, 2, 3, 5, 6, 7, 8, 10!

Aus einer oxyddispersionsgehärteten Nickelbasis-Superlegierung wurde ein Schaufelblatt 1 für eine Gasturbinen-Leitschaufel durch mechanische Bearbeitung hergestellt. Der Werkstoff lag in Form von prismatischem Halbzeug mit einem rechteckigen Querschnitt von 100 mm Breite und 30 mm Dicke im zonengelühten rekristallisierten grobkörnigen Zustand vor. Die längsgerichteten Stengelkristalle hatten durchschnittlich eine Länge von 15 mm, eine Breite von 5 mm und eine Dicke von 2,5 mm. Der mit dem Handelsnamen MA 6000 bezeichnete Werkstoffe von INCO hatte die nachfolgende Zusammensetzung:

$$
\begin{array}{lcll}
Cr & = & 15,0 & Gew.-\% \\
Al & = & 4,5 & Gew.-\% \\
Ti & = & 2,5 & Gew.-\% \\
Mo & = & 4,0 & Gew.-\% \\
Ta & = & 2,0 & Gew.-\% \\
Zr & = & 0,25 & Gew.-\% \\
B & = & 0,01 & Gew.-\% \\
C & = & 0,05 & Gew.-\% \\
Y_2O_3 & = & Rest & Gew.-\% \\
\end{array}
$$

Das Schaufelblatt 1 mit Tragflügelprofil hatte folgende Abmessungen:

```
Totale Länge        =       185  mm
(inkl. Fuss)
Grösste Breite      =        95  mm
Grösste Dicke       =        22  mm
Profilhöhe          =        27  mm
```

Das Kopfende 2 des Schaufelblattes 1 wurde auf seiner Mantelfläche durch mechanische Bearbeitung abgesetzt. Die Absetzung 11 war in axialer Richtung der Schaufel 12 mm hoch und wies Tragflügelprofil auf und hatte am oberen Ende eine umlaufende halbkreisförmige Nut 12 von 2,5 mm Durchmesser.

DAs Tragflügelprofil der Absetzung 11 (Zapfen) wies folgende Abmessungen auf:

```
Breite          =    58  mm
Grösste Dicke   =    17  mm
Profilhöhe      =    20  mm
```

Aus einer nichtdispersionsgehärteten Nickelbasis-Guss-Superlegierung wurde eine Deckplatte 5 gegossen. Die Legierung mit dem Handelsnamen IN 738 von INCO hatte die nachfolgende Zusammensetzung:

```
Cr    =    16,0     Gew.-%
Co    =     8,5     Gew.-%
Mo    =     1,75    Gew.-%
W     =     2,6     Gew.-%
Ta    =     1,75    Gew.-%
Nb    =     0,9     Gew.-%
Al    =     3,4     Gew.-%
Ti    =     3,4     Gew.-%
Zr    =     0,1     Gew.-%
B     =     0,01    Gew.-%
C     =     0,11    Gew.-%
Ni    =    Rest
```

Die Abmessungen der Deckplatte 5 nach der mechanischen Bearbeitung betrugen:

```
Länge (axial)         =    70  mm
Breite (tangential)   =    60  mm
Totale Höhe (radial)  =    14  mm
```

In der Deckplatte 5 wurde durch mechanische Bearbeitung eine Vertiefung 7 in Form eines 12 mm tiefen Sackloches mit Tragflügelprofil herausgearbeitet. In einem mittleren Abstand von 3 mm vom Grund der Vertiefung 7 wurde auf der ganzen Mantelfläche eine rund herum laufende Nut 8 halbkreisfömrigen Querschnitts von 2,5 mm Durchmesser herausgeschnitten. Ferner wurden in gleicher Höhe zwei Bohrungen 9 von 2,5 mm Durchmesser angebracht.

Nun wurde ein glatter, gerader Draht 10 von 2,5 mm Durchmesser aus einer warmfesten Knet-Legierung an einem Ende konisch zugespitzt und die Spitze abgerundet. Die warmfeste nichtaushärtbare Nickelbasis-Superlegierung wurde im duktilen Zustand verwendet, trug den Handelsnamen IN 625 von INCO und hatte die nachfolgende Zusammensetzung:

| | | | |
|----|---|------|--------|
| Cr | = | 21,5 | Gew.-% |
| Mo | = | 9,0  | Gew.-% |
| Nb | = | 3,6  | Gew.-% |
| Al | = | 0,2  | Gew.-% |
| Ti | = | 0,2  | Gew.-% |
| Fe | = | 2,5  | Gew.-% |
| Mn | = | 0,2  | Gew.-% |
| Si | = | 0,2  | Gew.-% |
| C  | = | 0,05 | Gew.-% |
| Ni | = | Rest |        |

Das Kopfende 2 des Schaufelblattes 1 und die Deckplatte 5 wurden axial zusammengesteckt. Der Draht 10 wurde nun mittels der Stossvorrichtung 14, welche aus einer Stahlhülse bestand, auf welche stirnseitig Hammerschläge in axialer Richtung ausgeführt wurden, über ein Bohrung 9 in den durch die Nuten 8 und 12 gebildeten Kanal eingeführt und etwa auf der Höhe der entsprechenden Schmalseite der Deckplatte 5 abgeschnitten.

Ein Abreissversuch in axialer Richtung des Schaufelblattes 1 bei Raumtemperatur ergab eine Abreisskraft beim Bruch von ca. 30000 N. Dabei wurde die Deckplatte 5 nicht aus der Verankerung herausgerissen. Der Bruch erfolgte vielmehr in der Absetzung 11 (Zapfen) des Schaufelblattes 1, wobei an deren stirnseitigem Ende die Scherspannungen den für oxyddispersionsgehärtete Nickelbasis-Superlegierungen mit Stengelkristallen gültigen zulässigen Grenzwert überschritten.

Ausführungsbeispiel 2:

Siehe Figuren 1, 3, 5, 6, 9, 10!

Aus einer oxyddispersionsgehärteten Nickelbasis-Superlegierung wurde gemäss Beispiel 1 ein Schaufelblatt gleicher Abmessungen und gleicher Zusammensetzung (MA 6000) wie in Beispeil 1 hergestellt. Das gleiche gilt für die Masse der Absetzung 11 (Zapfen).

Aus einer nichtdispersionsgehärteten Nickelbasis-Knet-Superlegierung wurde aus Stangemmaterial (Halbzeug) durch Abschneiden einer Scheibe und mechanische Bearbeitung eine Deckplatte 5 mit den gleichen Abmessungen wie in Beispiel 1 hergestellt. Die Legierung mit dem Handelsnamen Nimonic 80A hatte die nachfolgende Zusammensetzung:

EP 0 290 783 B1

| | | | |
|---|---|---|---|
| Cr | = | 19,5 | Gew.-% |
| Al | = | 1,4 | Gew.-% |
| Ti | = | 2,4 | Gew.-% |
| Zr | = | 0,06 | Gew.-% |
| Mn | = | 0,30 | Gew.-% |
| Si | = | 0,30 | Gew.-% |
| B | = | 0,003 | Gew.-% |
| C | = | 0,06 | Gew.-% |
| Ni | = | Rest | |

In die Deckplatte 5 wurde analog zu Beispiel 1 eine Vertiefung 7 mit einer Nut 8 herausgearbeitet (Form: Tragflügelprofil). Als Anschlüsse zur Nut 8 wurden an zwei Schmalseiten der Deckplatte 5 je zwei Bohrungen 9 ausgeführt.

Nun wurden Drähte 10 von leicht gewellter Form ("b" in Fig. 13) und 2,5 mm Durchmesser aus einer warmfesten Knetlegierung an je einem Ende zugespitzt und die Spitzen abgerundet. Die verwendete Nickelbasis-Superlegierung wurde im naturharten Zustand eingesetzt. Sie trug den Handelsnamen Nimonic 90 und hatte die nachfolgende Zusammensetzung:

| | | | |
|---|---|---|---|
| Cr | = | 19,5 | Gew.-% |
| Co | = | 16,5 | Gew.-% |
| Al | = | 1,45 | Gew.-% |
| Ti | = | 2,45 | Gew.-% |
| Zr | = | 0,06 | Gew.-% |
| Mn | = | 0,30 | Gew.-% |
| Si | = | 0,30 | Gew.-% |
| B | = | 0,003 | Gew.-% |
| C | = | 0,07 | Gew.-% |
| Ni | = | Rest | |

Die Deckplatte 5 und das Kopfende 2 des Schaufelblattes wurden axial zusammengesteckt. Die Drähte 10 wurden nun in die von den Nuten 8 und 12 gebildeten Kanäle eingestossen und abgeschnitten.

Es wurden Abreissversuche bei Raumtemperatur durchgeführt. Die Bruchlast betrug knapp 30000 N. Der Bruch, der durch Ueberschreiten der Scherfestigkeit des Schaufelblattwerkstoffs eingeleitet wurde, erfolgte innerhalb der Absetzung 11 des Schaufelblattes 1.

Ausführungsbeispiel 3:

Siehe Figuren 1, 3, 5, 6, 11, 12!

Aus einer oxydispersionsgehärteten Nickelbasis-Superlegierung wurde ein Schaufelblatt 1 für eine Gasturbinen-Leitschaufel durch mechanische Bearbeitung hergestellt. Der Werkstoff lag in Form von prismatischem Halbzeug mit einem rechteckigen Querschnitt von 120 mm Breite und 32 mm Dicke im zonengeglühten rekristallisierten grobkörnigen Zustand vor. Die längsgerichteten Stengelkristalle hatten durchschnittlich eine Länge von 18 mm, eine Breite von 6 mm und eine Dicke von 3 mm. Der Werkstoff hatte die nachfolgende Zusammensetzung:

8

```
Cr      =      20,0      Gew.-%
Al      =       6,0      Gew.-%


Mo      =       2,0      Gew.-%
W       =       3,5      Gew.-%
Zr      =       0,19     Gew.-%
B       =       0,01     Gew.-%
C       =       0,01     Gew.-%
Y2O3    =       1,1      Gew.-%
Ni      =      Rest
```

Das Schaufelblatt 1 mit Tragflügelprofil hatte folgende Abmessungen:

```
Totale Länge       =    200  mm
(inkl. Fuss)
Grösste Breite     =    100  mm
Grösste Dicke      =     24  mm
Profilhöhe         =     30  mm
```

Das Kopfende 2 des Schaufelblattes 1 wurde auf seiner Mantelfläche durch mechanische Bearbeitung abgesetzt. Die Absetzung 11 war in axialer Richtung der Schaufel 13 mm hoch und wies Tragflügelprofil auf und hatte am oberen Ende eine umlaufende halbkreisförmige Nut 12 von 2 mm Durchmesser. Das Tragflügelprofil der Absetzung 11 (Zapfen) wies folgende Abmessungen auf:

```
Breite          =      65  mm
Grösste Dicke   =      19  mm
Profilhöhe      =      23  mm
```

Aus einer Nickelbasis-Knet-Superlegierung wurde aus einem Blech eine Deckplatte 5 herausgeschnitten. Die Legierung mit dem Handelsnamen Hastelloy X hatte die nachfolgende Zusammensetzung:

```
Cr      =      22,0      Gew.-%
Co      =       1,5      Gew.-%
```

EP 0 290 783 B1

| | | | |
|---|---|---|---|
| Mo | = | 9,0 | Gew.-% |
| W | = | 0,6 | Gew.-% |
| Fe | = | 18,5 | Gew.-% |
| Mn | = | 0,50 | Gew.-% |
| Si | = | 0,50 | Gew.-% |
| C | = | 0,10 | Gew.-% |
| Ni | = | Rest | |

Die Abmessungen der Deckplatte 5 betrugen nach der mechanischen Bearbeitung:

| | | |
|---|---|---|
| Länge (axial) | = | 72 mm |
| Breite (tangential) | = | 65 mm |
| Totale Höhe (radial) | = | 16 mm |

In der Deckplatte 5 wurde durch mechanische Bearbeitung eine Vertiefung 7 in Form eines 13 mm tiefen Sackloches mit Tragflügelprofil herausgearbeitet. Auf deren Mantelfläche wurde eine rund herum laufende Nut 8 mit halbkreisförmigem Querschnitt von 2 mm Durchmesser herausgeschnitten und ausserdem zwei Bohrungen 9 von gleichem Durchmesser angebracht.

Nun wurde ein glatter, gerader Draht 10 variablen Durchmessers derart vorbereitet, dass er in seinem ersten Teil über eine Länge, die dem Umfang des Kopfendes 2 des Schaufelblattes 1 entsprach, einen Durchmesser von 1 mm (= halber Durchmesser der Nut 8) besass. Daran schloss ein schlankes konisches Stück an und der Rest besass den vollen Durchmesser von 2 mm. Der Draht 10 bestand aus der aushärtbaren Nickelbasis-Knet-Superlegierung mit dem Handelsnamen Nimonic 80A, deren Zusammensetzung unter Beispiel 2 angegeben ist. Es wurde im duktilen, zunächst lösungsgelühten und dann abgeschreckten Zustand verwendet. Dieser Draht 10 variablen Durchmessers wurde nun mit seinem 1 mm Durchmesser aufweisendem Teil über die Bohrungen 9 in die Nut 8 der Vertiefung 7 der Deckplatte 5 eingelegt und letztere axial über die Absetzung 11 (Zapfen) des Kopfendes 2 des Schaufelblattes 1 gestülpt. Dann wurde der Draht 10 in Pfeilrichtung (Fig. 11) nachgezogen, bis er mit seinem vollen Durchmesser in dem durch die Nuten 8 und 12 gebildeten Kanal zum Aufliegen kam. Hierauf wurden die überstehenden Enden des Drahtes 10 abgeschnitten. Zum Schluss wurde der Draht 10 durch Anlassen (Altern) während einer Zeit von 8 h bei 1020 °C und während 16 h bei 700 °C ausgehärtet.

Auf eine spezielle Alterung kann gegebenenfalls auch verzichtet werden. Eine solche erfolgt dann automatisch im Verlauf der ersten Betriebszeit durch Erreichen der maximal zulässigen Betriebstemperatur der Schaufel.

Ausführungsbeispiel 4:

Siehe Figuren 1, 3, 5, 6, 11, 12!
aus einer oxyddispersionsgehärteten Nickelbasis-Superlegierung wurde ein Schaufelblatt 1 für eine Gasturbinen-Leitschaufel durch mechansiche Bearbeitung hergestellt. Der Werkstoff lag in Form von prismatischem Halbzeug mit einem rechteckigen Querschnitt von 100 mm Breite und 32 mm Dicke im zonengeglühten rekristallisierten grobkörnigen Zustand vor. Die längsgerichteten Stengelkristalle hatten durchschnittlich eine Länge von 22 mm, eine Breite von 7 mm und eine Dicke von 3 mm. Der Werkstoff hatte die nachfolgende Zusammensetzung:

| | | | |
|---|---|---|---|
| Cr | = | 17,0 | Gew.-% |
| Al | = | 6,0 | Gew.-% |
| Mo | = | 2,0 | Gew.-% |
| W | = | 3,5 | Gew.-% |
| Ta | = | 2,0 | Gew.-% |
| Zr | = | 0,15 | Gew.-% |
| B | = | 0,01 | Gew.-% |
| C | = | 0,05 | Gew.-% |
| $Y_2O_3$ | = | 1,1 | Gew.-% |
| Ni | = | Rest | |

Das Schaufelblatt 1 mit Tragflügelprofil hatte folgende Abmessungen:

| | | | |
|---|---|---|---|
| Totale Länge | = | 190 | mm |
| (inkl. Fuss) | | | |
| Grösste Breite | = | 90 | mm |
| Grösste Dicke | = | 26 | mm |
| Profilhöhe | = | 30 | mm |

Das Kopfende 2 des Schaufelblattes 1 wurde auf seiner Mantelfläche durch mechanische Bearbeitung abgesetzt. Die Absetzung 11 war in axialer Richtung der Schaufel 14 mm hoch und wies Tragflügelprofil auf und hatte am oberen Ende eine umlaufende halbkreisförmige Nut 12 von 3 mm Durchmesser. Das Tragflügelprofil der Absetzung 11 (Zapfen) wies folgende Abmessungen auf:

| | | | |
|---|---|---|---|
| Breite | = | 55 | mm |
| Grösste Dicke | = | 20 | mm |
| Profilhöhe | = | 24 | mm |

Aus einer nichtdispersionsgehärteten Nickelbasis-Guss-Superlegierung wurde eine Deckplatte 5 gegossen. Die Legierung mit dem Handelsnamen IN 939 von INCO hatte die nachfolgende Zusammensetzung:

11

$$Cr = 22,4 \quad Gew.\text{-}\%$$
$$Co = 19,0 \quad Gew.\text{-}\%$$
$$Ta = 1,4 \quad Gew.\text{-}\%$$
$$Nb = 1,0 \quad Gew.\text{-}\%$$
$$Al = 1,9 \quad Gew.\text{-}\%$$
$$ti = 3,7 \quad Gew.\text{-}\%$$
$$Zr = 0,1 \quad Gew.\text{-}\%$$
$$C = 0,15 \quad Gew.\text{-}\%$$
$$Ni = Rest$$

Die Abmessungen der Deckplatte 5 nach der mechanischen Bearbeitung betrugen:

$$Länge\ (axial) = 68\ mm$$
$$Breite\ (tangential) = 58\ mm$$
$$Totale\ Höhe\ (radial) = 18\ mm$$

In der Deckplatte 5 wurde durch mechanische Bearbeitung eine Vertiefung 7 in Form eines 14 mm tiefen Sackloches mit Tragflügelprofil herausgearbeitet. Auf deren Mantelfläche wurde eine rund herum laufende Nut 8 mit halbkreisförmigem Querschnitt von 3 mm Durchmesser herausgeschnitten und ausserdem zwei Bohrungen 9 von gleichem Durchmesser angebracht.

Es wurde nun ein Draht 10 variablen Durchmessers ähnlich wie in Beispiel 3 angegeben vorbereitet. Das mit vollem Durchmesser von 3 mm vorliegende letzte Stück des Drahtes 10 wurde daraufhin gemäss Fig. 13e auf einer Länge, die dem Umfang des Kopfendes 2 des Schaufelblattes 1 entsprach, periodisch eingeschnürt. Der Draht 10 bestand aus der aushärtbaren Nickelbasis-Knetlegierungmit dem Handelsnamen Nimonic 90, deren Zusammensetzung unter Beispiel 2 angegeben ist. Er wurde im duktilen, zunächst lösungsgeglühten und dann abgeschreckten Zustand verwendet. Der Draht 10 wurde während 2 h bei einer Temperatur von 1050 °C geglüht und daraufhin in Wasser abgeschreckt. Das weitere Vorgehen war genau gleich wie in Beispiel 3 angegeben. Am Schluss wurde der Draht einer Aushärtung durch Warmbehandlung unterzogen, welche in einem Glühen während 8 h bei 1080' °C, gefolgt von Luftabkühlung, und während 16 h bei 700 °C wieder gefolgt von Luftabkühlung bestand.

Der Abreissversuch ergab eine Kraft in axialer Richtung der Schaufel beim Bruch von ca. 30000 N. Das Schaufelblatt 1 wurde nicht aus der Verankerung herausgerissen, sondern axial längs der Korngrenzen der Stengelkristalle abgeschert.

Die Erfindung ist nicht auf die Ausführungsbeispiele beschränkt. Grundsätzlich eignet sich das Verfahren zur Herstellung von Schaufeln aus beliebigen Werkstoffkombinationen und für beliebige Arten von thermischen Maschinen wie Dampf- und Gasturbinen, Turbokompressoren etc. Das Hauptanwendungsgebiet stellen indessen die oxyddispersionsgehärteten Nickelbasis-Superlegierungen sowie entsprechende ferritische Eisenbasislegierungen als Werkstoffe für das Schaufelblatt 1 für hochbeanspruchte Gasturbinen dar. Als Werkstoffe für den aus einem oder mehreren Stücken bestehenden Draht 10 kommen warmfeste naturharte Werkstoffe in Form von Nickellegierungen, aushärtbare oder bereits ausgehärtete Nickelbasis-Superlegierungen (Knetlegierungen) sowie vergütbare Eisenlegierungen (z.B. martensitische Stähle) in Frage. Der aushärtbare Draht 10 wird in diesem Falle im lösungsgeglühten und abgeschreckten duktilen Gefügezustand in den durch die Nuten 8 und 12 gebildeten Kanal der zu verbindenden Bauteile 1 und 5 eingeführt. Der Draht 10 kann entweder durch Reibungskräfte festgehalten werden oder am Schaufelblatt 1 oder an der Deckplatte 5 zusätzlich befestigt oder gesichert werden durch Schweissen, Löten, Stauchen, Verstemmen oder Umbiegen. Als Werkstoffe für die Deckplatte 5 oder das Deckband können vorteilhafterweise nichtoxyddispersionsgehärtete Nickel-Guss- oder Knetlegierungen oder korrosionsbeständige ferritische Stähle Verwendung finden. Statt eines einzigen, durch die Nuten 8 und 12 gebildeten Kanals können auch mehrere derartige Kanäle vorgesehen werden, wodurch die Uebertragungskräfte in axialer Richtung der Schaufel verteilt werden. Der Querschnitt des Drahtes 10 kann auch von der Kreisform abweichen und quadratisch, rechteckig oder oval ausgeführt werden. Wenn aus konstruktiven und/oder werkstofftechnischen Gründen der Schaufelfuss 4 nicht als monolithische Einheit mit dem Schaufelblatt 1 ausgeführt werden soll oder kann, dann ist in der Regel ein separates Fussstück zwischen Schaufelblatt 1 und Gehäuse bzw. Rotorkörper erforderlich. Dieses Fussstück kann vorteilhafterweise aus einem anderen Werkstoff als das Schaufelblatt 1 bestehen. Siehe oben, Fall der oxyddispersionsgehärteten Nickelbasis-Superlegierungen für das Schaufelblatt 1! Das besagte Fussstück kann dann in genau gleicher Weise wie die Deckplatte 5 mittels Draht 10 am Schaufelblatt 1 befestigt werden.

**Patentansprüche**

1.  Verfahren zur Herstellung einer aus einem Schaufelblatt (1), einem Schaufelfuss (4) und einer Deckplatte (5) oder einem Deckband bestehenden Schaufel für eine rotierende thermische Maschine durch Befestigen einer Deckplatte (5) oder eines Deckbandes am Kopfende (2) des Schaufelblattes (1), dadurch gekennzeichnet, dass das Kopfende (2) mit einer dem Profil des Schaufelblattes (1) ähnlichen, zapfenartigen Absetzung (11) versehen wird, welche auf ihrer Mantelfläche in einer Ebene senkrecht zur radial stehenden Längsachse der Schaufel mit einer um den ganzen Umfang der Mantelfläche verlaufenden aussenliegenden Nut (12) halbkreisförmigen Querschnitts versehen wird und dass die Deckplatte (5) mit einer dem Profil der Absetzung (11) entsprechenden Vertiefung (7) versehen wird, in deren innenliegende Mantelfläche eine um den ganzen Umfang verlaufende Nut (8) halbkreisförmigen Querschnitts mit gleichem Durchmesser wie derjenige der Nut (12) in der Absetzung (11) sowie Bohrungen (9) zur Einführung mindestens eines Drahtes (10) eingearbeitet werden, dass ferner diese derart vorbereiteten Bauteile (1; 5) in Richtung der Längsachse der Schaufel zusammengesetzt werden, derart, dass die Nuten (8; 12) einen Kanal mit vollständigem Kreisquerschnitt bilden, und dass in diesen Kanal ein oder mehrere Stücke eines blanken, stramm sitzenden, an seinem vorderen Ende spitzen warmfesten Drahtes (10) eingestossen und/oder gezogen und die an der Schmalseite der Deckplatte (5) vorstehenden Drahtenden abgetrennt werden.

2.  Verfahren nach Anspruch 1, dadurch gekennzeichnet, dass in den von den Nuten (8, 12) gebildeten Kanal zwischen Schaufelblatt (1) und Deckplatte (5) ein Draht (10) aus einem warmfesten naturharten Werkstoff eingestossen wird.

3.  Verfahren nach Anspruch 1, dadurch gekennzeichnet, dass in den von den Nuten (8, 12) gebildeten Kanal zwischen Schaufelblatt (1) und Deckplatte (5) ein Draht (10) aus einem aushärtbaren, lösungsgeglühten und abgeschreckten duktilen Werkstoff eingestossen und anschliessend durch eine Wärmebehandlung ausscheidungsgehärtet wird.

4.  Verfahren nach Anspruch 1, dadurch gekennzeichnet, dass der Draht (10) eine glatte gerade Oberfläche aufweist.

5.  Verfahren nach Anspruch 1, dadurch gekennzeichnet, dass der Draht (10) eine gewellte, gerändelte, gekerbte oder eingeschnürte Oberfläche aufweist.

6.  Verfahren nach Anspruch 1, dadurch gekennzeichnet, dass der Draht (10) am Schaufelblatt (1) und /oder an der Deckplatte (5) zusätzlich durch Schweissen, Löten, Stauchen, Umbiegen oder Verstemmen befestigt oder gesichert wird.

7.  Verfahren nach Anspruch 1, dadurch gekennzeichnet, dass für das Schaufelblatt (1) eine oxyddispersionsgehärtete Nickelbasis-Superlegierung, für die Deckplatte (5) eine Nickelbasis-Guss- oder Knet-Superlegierung und für den Draht (10) eine Nickelbasis-Knet-Superlegierung verwendet werden.

8.  Verfahren nach Anspruch 1, dadurch gekennzeichnet, dass für das Schaufelblatt (1) eine oxyddispersionsgehärtete ferritische Eisenbasislegierung, für die Deckplatte (5) ein korrosionsbeständiger ferritischer Stahl und für den Draht (10) ein vergütbarer martensitischer Stahl verwendet werden.

9.  Schaufel für eine rotierende thermische Maschine, bestehend aus einem Schaufelblatt (1), einem Schaufelfuss (4) und einer Deckplatte (5) oder einem Deckband, wobei letztere oder letzteres am Kopfende (2) des Schaufelblattes (1) befestigt ist, dadurch gekennzeichnet, dass das Kopfende (2) des Schaufelblattes (1) eine dem Profil des Schaufelblattes (1) ähnliche zapfenartige Absetzung (11) mit einer um den ganzen Umfang der Mantelfläche verlaufenden aussenliegenden Nut (12) halbkreisförmigen Querschnitts aufweist, dass die Deckplatte (5) oder das Deckband eine der Absetzung (11) des Schaufelblattes (1) entsprechende Vertiefung (7) mit einer um den ganzen Umfang der innenliegenden Mantelfläche verlaufenden Nut (8) halbkreisförmigen Querschnitts mit gleichem Durchmesser wie derjenige der Nut (12) der Absetzung (11) sowie Bohrungen (9) zur Einführung mindestens eines Drahtes (10) aufweist, und dass der derart durch besagte Nuten (8, 12) gebildete Kanal mit kreisförmigem Querschnitt durch ein oder mehrere gebogene, stramm sitzende Stücke eines warmfesten Drahtes (10) derart ausgefüllt ist, dass eine rein mechanische, feste Verbindung zwischen dem Kopfende (2) des Schaufelblattes (1) und der Deckplatte (5) oder dem Deckband besteht.

10. Schaufel nach Anspruch 9, dadurch gekennzeichnet, dass der Draht (10) eine glatte Oberfläche aufweist.

11. Schaufel nach Anspruch 9, dadurch gekennzeichnet, dass der Draht (10) eine gewellte, gerändelte, gekerbte oder eingeschnürte Obefläche aufweist.

12. Schaufel nach Anspruch 9, dadurch gekennzeichnet, dass der Draht (10) ohne zusätzliche Befestigung am Kopfende (2) des Schaufelblattes (1) oder der Deckplatte (5) oder des Deckbandes nur durch Reibungskräfte festgehalten ist, dergestalt, dass Deckplatte (5) oder Deckband vom Schaufelblatt (1) demontierbar sind.

13. Schaufel nach Anspruch 9, dadurch gekennzeichnet, dass der Draht (10) zusätzlich durch eine Schweiss- oder Lötverbindung oder eine Stauchung, Verklemmung oder Umbiegung am Kopfende (2) des Schaufelblattes (1) oder der Deckplatte (5) oder des Deckbandes festgehalten ist.

14. Schaufel nach Anspruch 9, dadurch gekennzeichnet, dass das Schaufelblatt (1) aus einer oxyddispersionsgehärteten Nickelbasis-Superlegierung, die Deckplatte (5) oder das Deckband aus einer Nickelbasis-Guss- oder Knet-Superlegierung und der Draht (10) aus einer Nickelbasis-Knet-Superlegierung bestehen.

15. Schaufel nach Anspruch 9, dadurch gekennzeichnet, dass das Schaufelblatt (1) und der Schaufelfuss (4) aus einer oxyddispersionsgehärteten ferritischen Eisenbasislegierung, die Deckplatte (5) oder das Deckband aus einem korrosionsbeständigen ferritischen Stahl und der Draht (10) aus einem vergütbaren martensitischen Stahl bestehen.

## Claims

1. Method of manufacturing rotating thermal machine blading, consisting of an aerofoil (1), a root (4) and a shroud plate (5) or a shroud to the tip (2) of the aerofoil (1), characterised in that the tip (2) is provided with a spigot-type step (11) similar to the profile of the aerofoil (1), which step is provided on its generated surface with a groove (12) of semi-circular cross-section and extending around the whole periphery of the generated surface in a plane at right angles to the radial longitudinal axis of the blading, and in that the shroud plate (2) is provided with a recess (7) corresponding to the profile of the step (11), in the internal generated surface of which recess is machined a groove (8) extending around the whole periphery of semi-circular cross-section with the same diameter as that of the groove (12) in the step (11) as well as bores (9) for insertion of at least one wire (10), in that, furthermore, these components (1; 5) prepared in this way are assembled in the direction of the longitudinal axis of the blading in such a manner that the grooves (8; 12) form a duct with complete circular cross-section, and in that one or more pieces of a bright firmly seated, heat-resisting wire (10), pointed at its front end, are pushed and/or pulled into this duct and the wire ends protruding at the narrow side of the shroud plate (5) are cut off.

2. Method according to Claim 1, characterised in that a wire (10) made from a heat-resisting naturally hard material is pushed into the duct, formed by the grooves (8, 12), between the aerofoil (1) and the shroud plate (5).

3. Method according to Claim 1, characterised in that a wire (10) made from a hardenable solution-treated and quenched ductile material is pushed into the duct, formed by the grooves (8, 12), between the aerofoil (1) and the shroud plate (5) and is subsequently precipitation-hardened by heat treatment.

4. Method according to Claim 1, characterised in that the wire (10) has a smooth straight surface.

5. Method according to Claim 1, characterised in that the wire (10) has a wavy, knurled, notched or necked-in surface.

6. Method according to Claim 1, characterised in that the wire (10) is additionally fastened or secured by welding, brazing, upsetting, bending or caulking to the aerofoil (1) and/or to the shroud plate (5).

7. Method according to Claim 1, characterised in that an oxide-dispersion-hardened nickel-based superalloy is used for the aerofoil (1), a nickel-based cast or forged superalloy is used for the shroud plate (5) and a nickel-based forged superalloy is used for the wire (10).

8. Method according to Claim 1, characterised in that an oxide-dispersion-hardened ferritic iron-based alloy is used for the aerofoil (1), a corrosion-resistant ferritic steel is used for the shroud plate (5) and a heat-treatable martensitic steel is used for the wire (10).

9. Blading for a rotating thermal machine, consisting of an aerofoil (1), a root (4) and a shroud plate (5) or a shroud, either of the last two being fastened to the tip (2) of the aerofoil (1), characterised in that the tip (2) of the aerofoil (1) has a spigot-type step (11) similar to the profile of the aerofoil (1) and with an external groove (12) extending around the whole periphery of the generated surface and having a semi-circular cross-section, in that the shroud plate (5) or the shroud has a recess (7), corresponding to the step (11) of the aerofoil (1), with a groove (8) extending around the whole periphery of the inner generated surface and having a semi-circular cross-section which has the same diameter as that of the groove (12) of the step (11), as well as bores (9) for insertion of at least one wire (10), and in that the circular cross-section duct thus formed by the grooves (8, 12) mentioned is filled in such a way by one or more bent, firmly seating pieces of a heat-resisting wire (10) that a purely mechanical, firm connection exists between the tip (2) of the aerofoil (1) and the shroud plate (5) or the shroud.

10. Blading according to Claim 9, characterised in that the wire (10) has a smooth surface.

11. Blading according to Claim 9, characterised in that the wire (10) has a wavy, knurled, notched or necked-in surface.

12. Blading according to Claim 9, characterised in that the wire (10) is held by frictional forces only on the tip (2) of the aerofoil (1) or the shroud plate (5) or the shroud without additional fastening in such a manner that the shroud plate (5) or shroud can be removed from the aerofoil (1).

13. Blading according to Claim 9, characterised in that the wire (10) is additionally held by a welded or brazed connection (10) is additionally held by a welded or brazed connection or by upsetting, clamping or bending on the tip (2) of the aerofoil (1) or on the shroud plate (5) or the shroud.

14. Blading according to Claim 9, characterised in that the aerofoil (1) consists of an oxide-dispersion-hardened nickel-based superalloy, the shroud plate (5) or the shroud consists of a nickel-based cast or forged superalloy, and the wire (10) consists of a nickel-based forged superalloy.

15. Blading according to Claim 9, characterised in that the aerofoil (1) and the root (4) consist of an oxide-dispersion-hardened ferritic iron-based alloy, the shroud plate (5) or the shroud consists of a corrosion-resistant ferritic steel, and the wire (10) consists of a heat-treatable martensitic steel.

**Revendications**

1. Procédé de fabrication d'une aube, comprenant une pale (1), une emplanture d'aube (4) et une plaque de couverture (5) ou une bande de couverture, destinée à une machine thermique rotative, par fixation d'une plaque de couverture (5) ou d'une bande de couverture à l'extrémité de tête (2) de la pale (1), caractérisé en ce que l'extrémité de tête (2) est munie d'un gradin (11) en forme de tenon semblable au profil de la pale (1), qui est muni, sur sa surface enveloppe, dans un plan perpendiculaire à l'axe longitudinal en position radiale de l'aube, d'une gorge extérieure (12) faisant tout le tour de la surface enveloppe et à section transversale semi-circulaire et que la plaque de couverture (5) est munie d'un creux (7) correspondant au profil du gradin (11) et dans la surface enveloppe intérieure duquel sont ménagées une gorge (8) suivant tout le contour, à section transversale semi-circulaire du même diamètre que celle de la gorge (12) dans le gradin (11), et des forures (9) pour introduire au moins un fil (10), qu'en outre, ces pièces (1; 5) ainsi préparées sont assemblées, dans la direction de l'axe longitudinal de l'aube, de façon que les gorges (8; 12) forment un canal à section complètement ronde et qu'un ou plusieurs morceaux d'un fil blanc (10) résistant à la chaleur, pointu à son extrémité antérieure et tendu sont introduits par poussée et/ou traction et les extrémités de fil en saillie du petit côté de la plaque de couverture (5) sont coupées.

2. Procédé suivant la revendication 1, caractérisé en ce qu'un fil (10) fait d'un matériau résistant à la chaleur, naturellement dur est introduit par poussée dans le canal formé par les gorges (8; 12) entre la pale (1) et la plaque de couverture (5).

3. Procédé suivant la revendication 1, caractérisé en ce qu'un fil (10) fait d'un matériau durcissable, ayant subi un recuit de mise en solution et une trempe ductile, est introduit par poussée dans le canal formé par les gorges (8; 12) entre la pale (1) et la plaque de couverture (5) et est ensuite durci par ségrégation par un traitement thermique.

4. Procédé suivant la revendication 1, caractérisé en ce que le fil (10) présente une surface lisse droite.

5. Procédé suivant la revendication 1, caractérisé en ce que le fil (10) présente une surface ondulée, dentelée, entaillée ou rétreinte.

6. Procédé suivant la revendication 1, caractérisé en ce que le fil (10) est, en outre, fixé ou assujetti à la pale (1) et/ou à la plaque de couverture (5) par brasage, soudage, refoulement, pliage ou matage.

7. Procédé suivant la revendication 1, caractérisé en ce qu'il est fait usage d'un superalliage à base de nickel durci par une dispersion d'oxyde pour la pale (1), d'un superalliage conoyé ou moulé à base de nickel pour la plaque de couverture (5) et d'un superalliage conoyé à base de nickel pour le fil (10).

8. Procédé suivant la revendication 1, caractérisé en ce qu'il est fait usage d'un alliage à base de fer ferritique durci par une dispersion d'oxyde pour la pale (1), d'un acier ferritique résistant à la corrosion pour la plaque de couverture (5) et d'un acier martensitique propre à la trempe et au revenu pour le fil (10).

9. Aube pour une machine thermique rotative, comprenant une pale (1), une emplanture d'aube (4) et une plaque de couverture (5) ou une bande de couverture, celle-ci étant fixée à l'extrémité de tête (2) de la pale (1), caractérisé en ce que l'extrémité de tête (2) de la pale (1) présente un gradin (11) en forme de tenon semblable au profil de la pale (1) qui est muni d'une gorge extérieure (12) faisant tout le tour de la surface enveloppe et à section transversale semi-circulaire, que la plaque de couverture (5) ou la bande de couverture comprend un creux (7) correspondant au gradin (11) de la pale (1) et muni d'une gorge (8) à section semi-circulaire faisant tout le tour de la surface enveloppe intérieure et du même diamètre que celui de la gorge (12) du gradin (11), ainsi que des forures (9) pour l'introduction d'au moins un fil (10), et que le canal à section circulaire ainsi formé par les gorges (8; 12) est rempli par une ou plusieurs pièces courbées, d'un fil (10) résistant à la chaleur, tendu de façon qu'une liaison purement mécanique ferme existe entre l'extrémité de tête (2) de la pale (1) et la plaque de couverture (5) ou de la bande de couverture.

10. Aube suivant la revendication 9, caractérisée en ce que le fil (10) présente une surface lisse droite.

11. Aube suivant la revendication 9, caractérisée en ce que le fil (10) présente une surface ondulée, dentelée, entaillée ou rétreinte.

12. Aube suivant la revendication 9, caractérisée en ce que le fil (10) est retenu uniquement par des forces de frottement, sans fixation supplémentaire à l'extrémité de tête (2) de la pale (1) ou de la plaque de couverture (5) ou de la bande de couverture, de façon que la plaque de couverture (5) ou la bande de couverture soit démontable de la pale (1).

13. Aube suivant la revendication 9, caractérisée en ce que le fil (10) est, en outre, retenu à l'extrémité de tête (2) de la pale (1) ou de la plaque de couverture (5) ou de la bande de couverture par une liaison brasée ou soudée ou par refoulement, pliage ou matage.

14. Aube suivant la revendication 9, caractérisée en ce que la pale (1) consiste en un superalliage à base de nickel durci par une dispersion d'oxyde, la plaque de couverture (5) ou la bande de couverture, en un superalliage conoyé ou moulé à base de nickel et le fil (10) en un superalliage conoyé à base de nickel.

15. Aube suivant la revendication 9, caractérisée en ce que la pale (1) et l'emplanture d'aube (4) consistent en un alliage à base de fer ferritique durci par une dispersion d'oxyde, la plaque de couverture (5) ou la bande de couverture, en un acier ferritique résistant à la corrosion et le fil (10) en un acier martensitique propre à la trempe et au revenu.

# FIG.1

8   7        6   5

# FIG.2

8

5

9

10

10

11   12

2

FIG.3

11

12

2

FIG.4

10

11
13
12

2

FIG.5

13

# FIG.6

FIG.7

FIG.8

# FIG.9

FIG.10

# FIG.11

# FIG.12

A-A

# FIG.13

a

b

c

d

e